(19) Europäisches Patentamt
European Patent Office
Office européen des brevets

(11) **EP 4 383 600 A1**

(12) **EUROPEAN PATENT APPLICATION**

(43) Date of publication:
**12.06.2024 Bulletin 2024/24**

(21) Application number: **22306797.6**

(22) Date of filing: **06.12.2022**

(51) International Patent Classification (IPC):
**H04L 1/00** $^{(2006.01)}$

(52) Cooperative Patent Classification (CPC):
**H04L 1/0042; H04L 1/0068**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **CORLAY, Vincent**
**35708 RENNES CEDEX 7 (FR)**
• **GRESSET, Nicolas**
**35708 RENNES CEDEX 7 (FR)**

(74) Representative: **Plasseraud IP**
**66, rue de la Chaussée d'Antin**
**75440 Paris Cedex 09 (FR)**

(54) **METHOD, DATA TRANSMITTER AND COMPUTER PROGRAM FOR ADAPTING A BICM SCHEME TO AMPLITUDE SHAPING IN COMBINATION WITH PUNCTURING**

(57)    The invention relates to a method for transmitting symbols. A first signal, comprising a bit sequence representing a first data flow and a second data flow, is obtained. The first data flow comprises shaping bits. The second data flow comprises non-shaping bits, including quantification bits and/or a sign bit. At least part of the non-shaping bits of the second data flow are punctured, thusly obtaining incomplete bit streams. The symbols are obtained based at least on the incomplete bit streams and on the first data flow.

The invention further relates to a corresponding data transmitter and to a corresponding computer program.

FIG. 9

## Description

## Technical Field

This disclosure pertains to the field of telecommunications.

The disclosure more particularly relates to a method for transmitting symbols, to a data transmitter and to a computer program.

## Background Art

In a communication system and for a given communication channel, the channel capacity characterizes the highest information rate that can be achieved for a fixed average transmit power while maintaining a small error probability.

In general, the channel inputs, transmitted by the transmitter, are symbols of a finite set. This finite set is called a constellation. It can be for instance a one-dimensional amplitude-shift keying (ASK) constellation or a two-dimensional quadrature-amplitude modulation (QAM) constellation. The latter can be seen as the cartesian product of two ASK constellations.

Often, the channel capacity cannot be reached if each symbol of the constellation is transmitted with equal probability. As a result, the transmitter should process the data such that each symbol of the constellation is transmitted with a probability which enables to approach the capacity. This operation is called shaping.

In addition to shaping, the message should also be protected with an error-correcting code. The 5G new radio (NR) standard specifies a coding scheme called bit-interleaved coded modulation (BICM). This coding scheme does not implement shaping.

Combining shaping and coding is not trivial and requires a specific algorithm, especially if the 5G NR coding scheme is to be respected.

There is therefore a need for a coding scheme suitable as a BICM scheme, preferably suitable as a 5G NR coding scheme, and which allows providing, as outputs, symbols which respect the shaping performed by a distribution matcher (DM).

## Summary

This disclosure improves the situation.

It is proposed a method, in a data transmitter, for transmitting k" symbols, with k" being a positive integer, the method comprising:

- obtaining an input bit sequence representing a first data flow and a second data flow,

  the first data flow comprising $k' \times (m - q)$ shaping bits representing, at least, m - q input labelling bit streams, with k' being a positive integer greater than or equal to $k''$, m being a number of bit streams to be outputted by a de-multiplexer and q being a positive integer,

  the second data flow comprising c' non-shaping bits, with c' being a positive integer smaller than or equal to $(q - 1)k'$, the $c'$ non-shaping bits comprising at most q - 1 quantification and/or sign bits,

- puncturing at least part of the non-shaping bits of the second data flow, thusly obtaining at most $q$ - 1 incomplete bit streams, and
- obtaining the k" symbols based at least on the at most q - 1 incomplete bit streams, and on the m - q input labelling bit streams of the first data flow.

In other words, it is proposed a technique where non-shaping bits are punctured. According to this technique, when the input bit sequence comprises c' non-shaping bits, c of the c' non-shaping bits may be punctured after the encoding.

The proposed technique may be implemented as an improvement to the existing 5G NR coding scheme with minor modification to the specifications, and more generally any BICM scheme, such that the symbols at the output of the coding respects the shaping performed by a distribution matcher. In particular, the proposed technique allows puncturing some systematic bits, for instance in the process of rate matching (RM) and hybrid automatic repeat request (HARQ), without altering the target shaping distribution.

Optionally, the method may further comprise ordering the input bit sequence by placing c of the c' non-shaping bits at systematic puncturing locations, with c being a positive integer smaller than or equal to $c'$, and puncturing at least part of the non-shaping bits of the second data flow may comprise puncturing at least the c non-shaping bits at the systematic puncturing locations.

Alternatively, the c non-shaping bits may be received at default positions in the input bit sequence and the systematic puncturing locations may be chosen to correspond to these default positions, so that it is not necessary to order the input bit sequence prior to puncturing. In other words, the method may further comprise designating locations of at least c of the c' non-shaping bits in the input bit sequence as systematic puncturing locations and puncturing at least part of the non-shaping bits of the second data flow may comprise puncturing at least the c non-shaping bits at the systematic puncturing locations.

Optionally, the method may further comprise:

- obtaining an output of an encoder using a systematic error-correcting coding scheme and having received as input bits associated to the input bit sequence, the output of the encoder comprising $qk'$ - $d$ parity bits, with $d = c'$ - $c$ and $d$ being a positive integer or zero, and
- completing the at most q - 1 incomplete bit streams with ($qk'$ - $d$) - $k'$ of the $qk'$ - $d$ parity bits, thusly obtaining at most q - 1 completed bit streams, and

obtaining the k" symbols may be based on
the m - q input labelling bit streams of the first data flow,
the at most q - 1 completed bit streams, and
the parity bits output by the encoder and not used to complete the at most q - 1 incomplete bit streams.

It is not required that the data transmitter itself obtains the output of an encoder, completes the incomplete bit streams and/or determines the k" symbols. According to an alternative possibility, the method may comprise transmitting the q - 1 incomplete bit streams to an entity that is separate from the data transmitter. Such separate entity may be further adapted to determine the k" symbols based on the q - 1 incomplete bit streams and to provide the determined k" symbols in return to the data transmitter. The data transmitter, having thusly obtained the k" symbols from the separate entity, is then able to transmit them over an appropriate channel.

Optionally, $c'$ = $k'$.

Optionally, $c$ = $c'$.

Optionally, obtaining the k" symbols based on the m original labelling bit streams comprises:

- ordering an output bit sequence comprising the m original labelling bit streams by placing $x$ bits in additional puncturing locations, with $x$ being a positive integer, the $x$ bits comprising x/m bits of each of the m original labelling bit streams,
- puncturing the $x$ bits placed in the additional puncturing locations to obtain m punctured labelling bit streams, and
- obtaining the k" symbols by using one bit of each punctured labelling bit stream to label a corresponding input symbol.

In other words, it is further proposed a technique where shaping bits are punctured. The input bit sequence may be provided to an encoder, then the input bit sequence may be concatenated with the output of the encoder to obtain an output bit sequence. Ordering this output bit sequence may comprise placing all the bits to be punctured at additional puncturing locations, for instance at the end of the output bit sequence, by using a second interleaver. In a first example, the input bit sequence only comprises shaping bits. In this case, no 'first interleaver' is required prior to encoding and the bits to be punctured are the $x$ bits comprising x/m bits of each of the m original labelling bit streams. In a second example, the input bit sequence comprises both shaping bits and non-shaping bits.. In this case, it is possible to puncture only shaping bits, or only non-shaping bits, or both shaping bits and non-shaping bits. In the latter case, both techniques may be combined, and the bits to be punctured may then include not only the $x$ bits comprising x/m bits of each of the m original labelling bit streams, but also c of the c' non-shaping bits.

The combined techniques where both shaping bits and non-shaping bits are punctured enable implementing the rates $R = \frac{(m-q)k'+c'}{(m-q)k'+qk'-d-x} = \frac{(m-q)k'+c}{mk'-d-x}$, where:

the rate of the code is $\frac{(m-q)k'+c'}{mk'+c-d}$,
c is the number of systematic non-shaping bits punctured (and c' = c + d), and
$x$ is the number of bits punctured, under the constraint that $\frac{x}{m}$ bits of each original labelling bit stream are punctured.

Optionally, the additional puncturing locations correspond to the end of the output bit sequence after ordering the output bit sequence.

Then, a rate matcher puncturing the last coded bits (as the one in the 5G NR LDPC coding scheme) may discard the bits to be punctured.

In another example, obtaining the k" symbols comprises:

- using one bit of each original labelling bit stream to label a corresponding input symbol, thusly obtaining the k" symbols and additional symbols, and
- discarding the additional symbols using a rate matcher.

Then, compared to the previous example, no interleaver is required before the rate matcher.

Optionally, the method further comprises, after transmitting the k' symbols, separately transmitting symbols having, as labelling bits, the c punctured non-shaping bits and the $x$ punctured bits.

It is further proposed a data transmitter configured for transmitting k" symbols, with k" being a positive integer, by at least:

- obtaining an input bit sequence representing a first data flow and a second data flow,

the first data flow comprising k' × (m - q) shaping bits representing, at least, m - q input labelling bit streams, with k' being a positive integer greater than or equal to $k''$, m being a number of bit streams to be outputted by a de-multiplexer and q being a positive integer,
the second data flow comprising c' non-shaping bits, with c' being a positive integer smaller than or equal to (q - 1)$k'$, the c' non-shaping bits comprising at most q - 1 quantification and/or sign bits,

- puncturing at least part of the non-shaping bits of the second data flow, thusly obtaining at most $q - 1$ incomplete bit streams, and
- obtaining the k" symbols based at least on the at most $q - 1$ incomplete bit streams, and on the $m - q$ input labelling bit streams of the first data flow..

It is further proposed a computer program comprising instructions which, when the program is executed by a computer, cause the computer to carry out the above method.

**Brief Description of Drawings**

Other features, details and advantages will be shown in the following detailed description and on the figures, on which:

**Fig. 1**

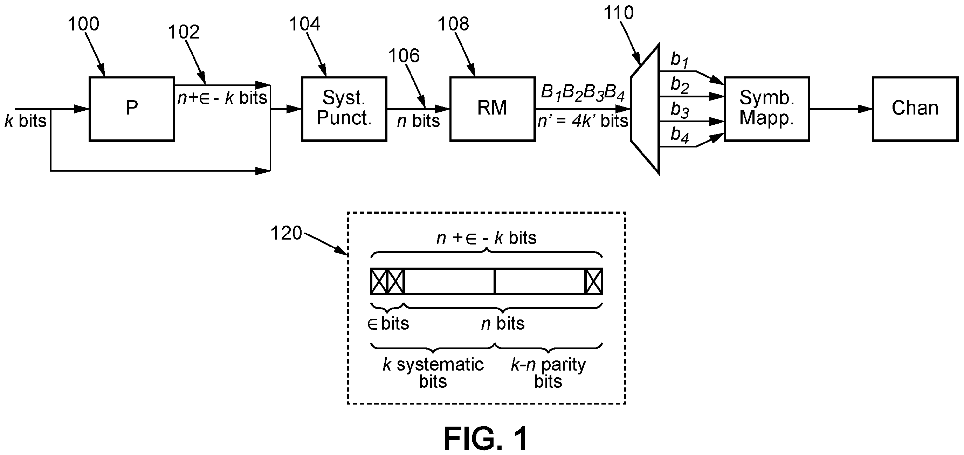

[Fig. 1] illustrates the 5G NR LDPC coding scheme, as known from prior art.

**Fig. 2**

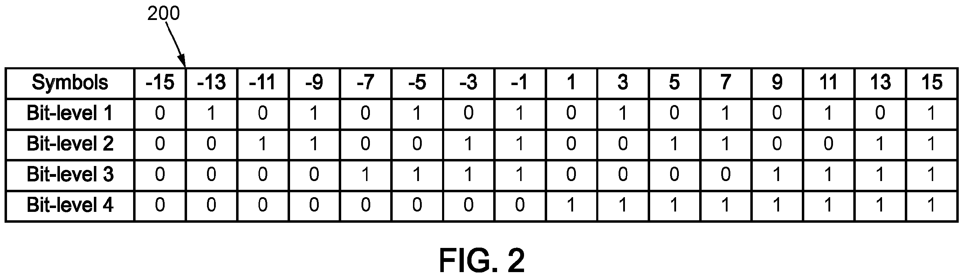

[Fig. 2] illustrates the natural bit labelling of the 16-ASK constellation, as known from prior art.

**Fig. 3**

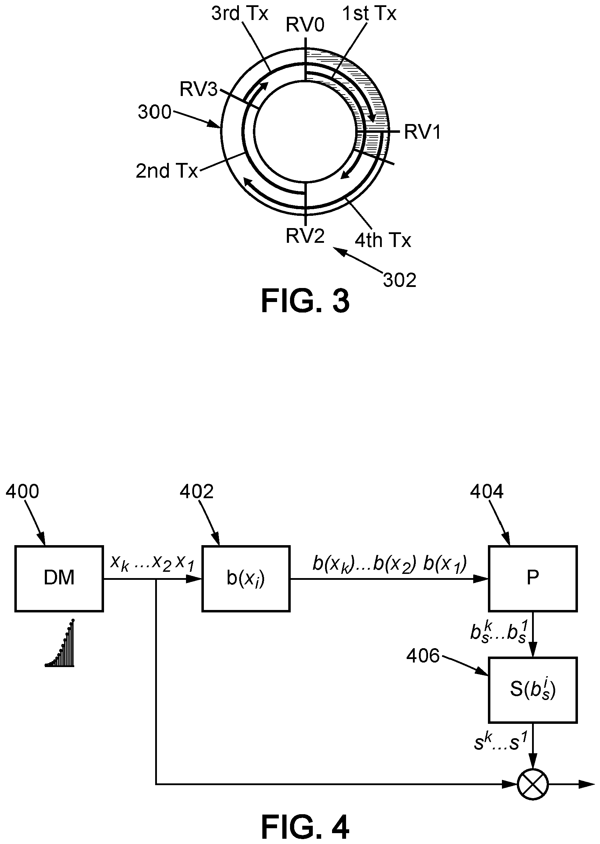

[Fig. 3] illustrates implementation of a HARQ scheme in 5G, as known from prior art.

**Fig. 4**
[Fig. 4] illustrates a probabilistic amplitude shaping technique, as known from prior art.

**Fig. 5**

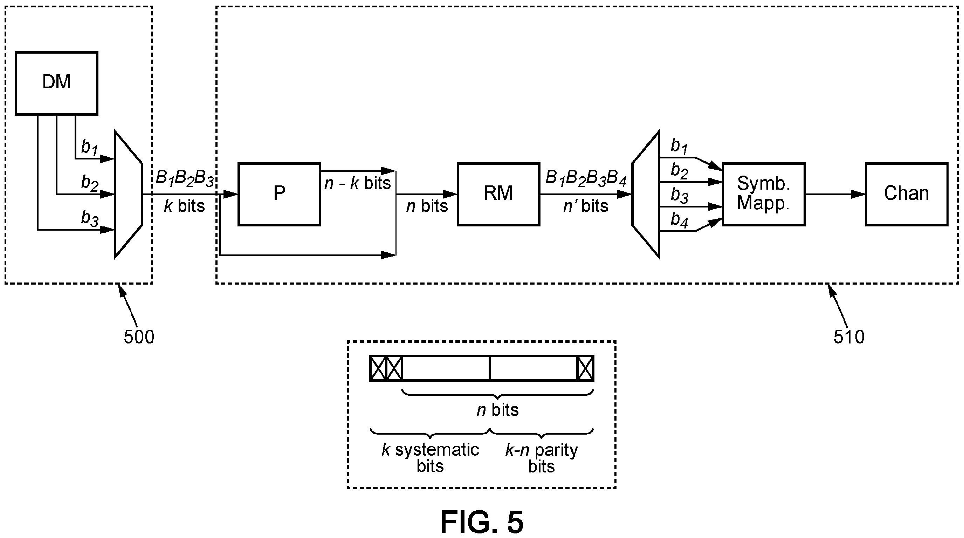

[Fig. 5] illustrates a system with a distribution matcher (DM) arranged in front of a 5G NR LDPC coding scheme.

**Fig. 6**

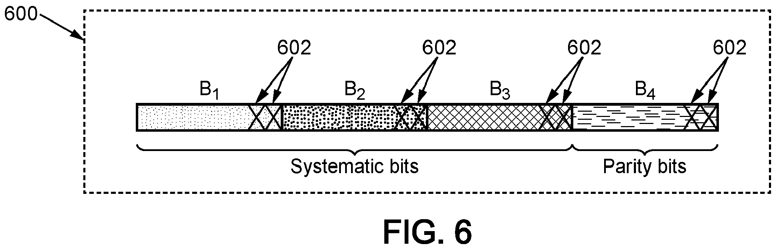

[Fig. 6] illustrates a puncturing scheme in an embodiment.

**Fig. 7**

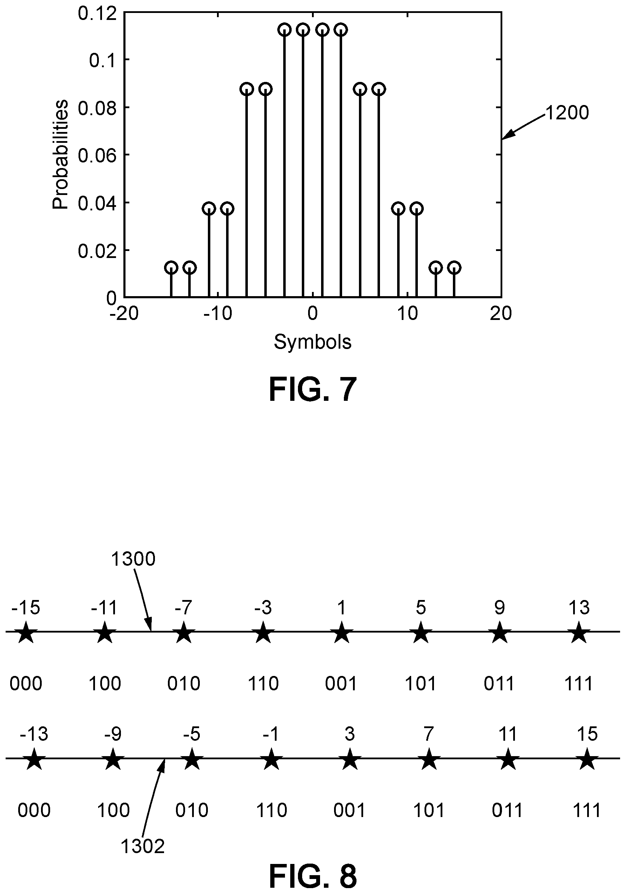

[Fig. 7] illustrates an example of quantized target shaping distribution for a 16-ASK constellation, as known from prior art.

**Fig. 8**
[Fig. 8] illustrates the two sub-constellations of the 16-ASK constellation with their natural labelling (but without the quantification bits) according to the main constellation with the less significant bit on the left, as known from prior art.

**Fig. 9**

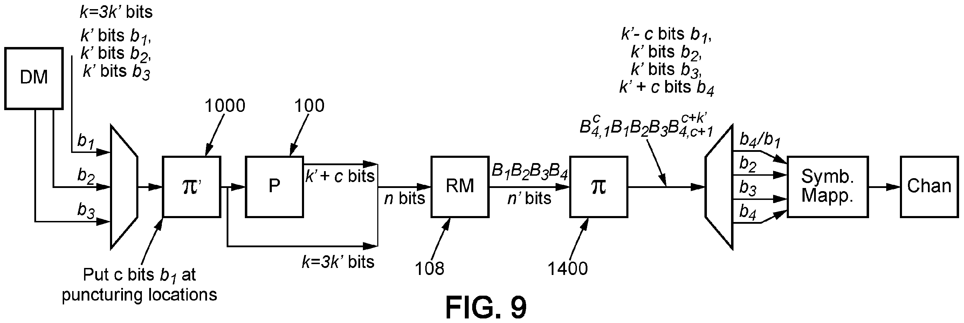

[Fig. 9] illustrates an adaptation of a 5G NR LDPC scheme where systematic non-shaping bits are punctured, in an embodiment.

**Fig. 10**

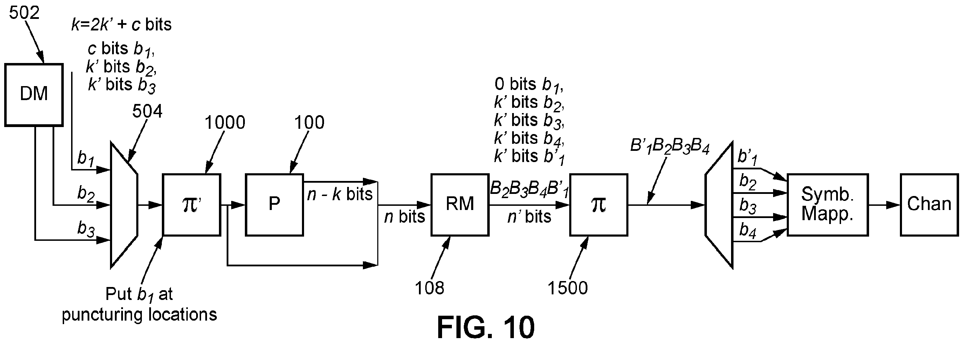

[Fig. 10] illustrates another adaptation of a 5G NR LDPC scheme where systematic non-shaping bits are punctured, in another embodiment.

**Fig. 11**

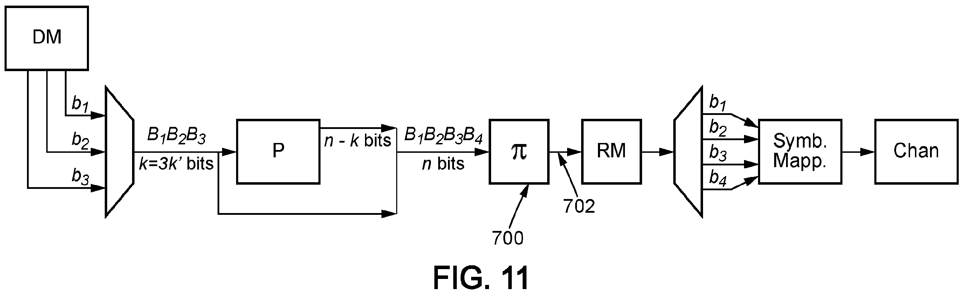

[Fig. 11] illustrates a system which differs from the system depicted on Fig. 5 in that an interleaver is arranged in between a systematic parity encoder and a rate matcher, in an embodiment.

**Fig. 12**

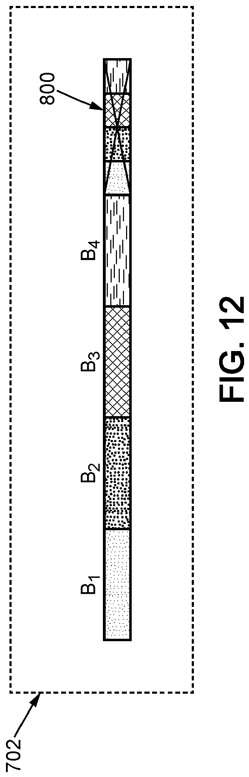

[Fig. 12] illustrates an ordering of bits after the interleaver depicted on Fig. 11, in an embodiment.

**Fig. 13**

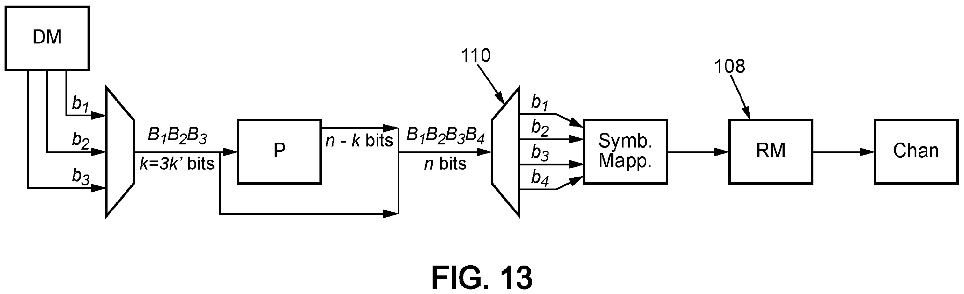

[Fig. 13] illustrates a system which differs from the system depicted on Fig. 5. in that places of a rate matcher and of a multiplexer are switched, in an embodiment.

**Fig. 14**

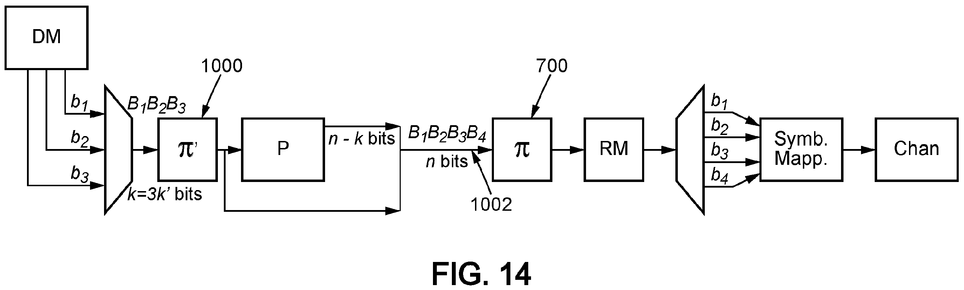

[Fig. 14] illustrates a system which differs from the system depicted on Fig. 11, in that an additional interleaver is arranged after a multiplexer, in an embodiment.

**Fig. 15**

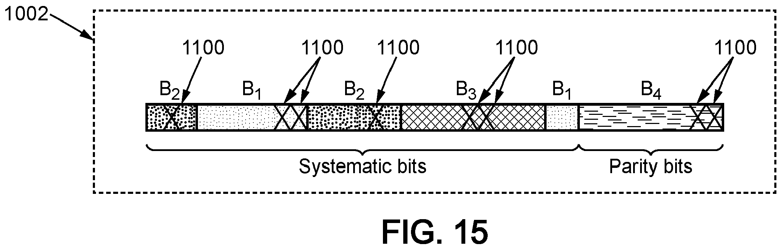

[Fig. 15] illustrates an ordering of bits that is alternative to the ordering depicted on Fig. 12, in an embodiment..

**Fig. 16**

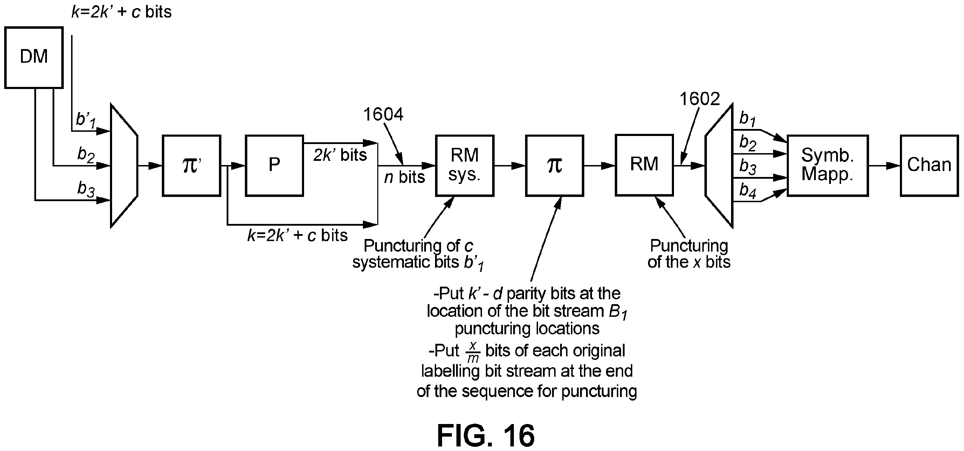

[Fig. 16] illustrates an adaptation of a 5G NR LDPC scheme where both systematic shaping and non-shaping bits are punctured, in an embodiment.

**Fig. 17**

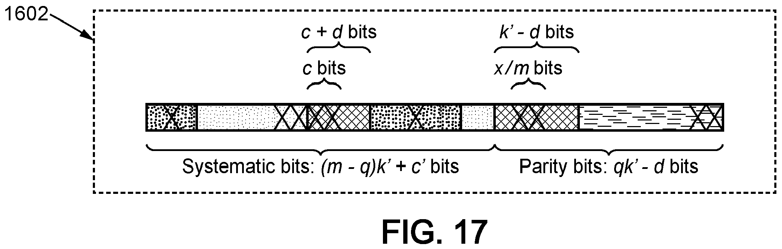

[Fig. 17] illustrates an example of a sequence at the output of the parity encoding in Fig. 16, before the puncturing and interleaving, in an embodiment.

**Fig. 18**

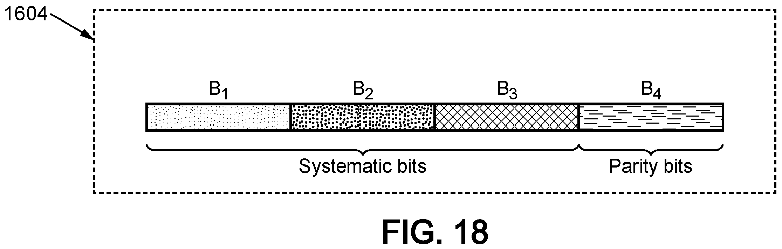

[Fig. 18] illustrates coded bits at the output of the error-correcting code in Fig. 16, in an embodiment.

**Fig. 19**

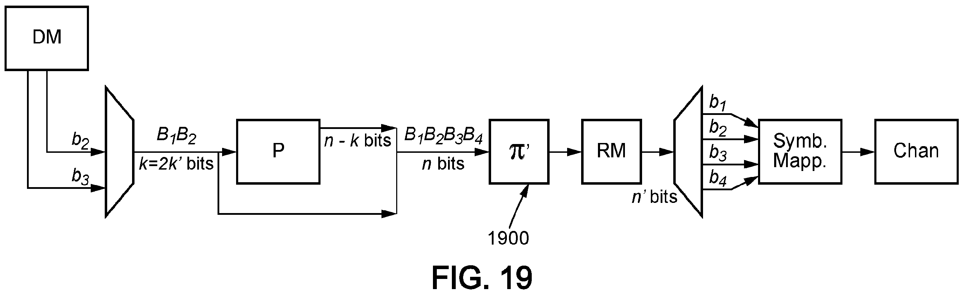

[Fig. 19] illustrates an adaptation of a HARQ scheme where both systematic shaping and non-shaping bits are punctured, in an embodiment.

**Description of Embodiments**

It is now referred to the 5G new radio (NR) low-density parity-check (LDPC) coding scheme, shown in Figure 1 as described in 3GPP TS 38.212. An overview can also be found in [DPS2020].

5G NR LDPC coding schemes work as follows. *k* information bits are used as inputs of a systematic parity encoder (100). n + ε - *k* parity bits (102) are produced without modifying the information bits as the code is systematic. After encoding, ε = 2Z systematic bits are punctured by a puncturer (104). Z is a parameter which depends on the code length used. The resulting codeword, of size *n* is called mother codeword (106). The rate of the mother code is $R = k/n$. Then, a rate-matcher (RM) (108) is responsible for removing (puncturing) some bits of the mother codeword such that only n' bits are outputted. The effective rate of the system is $R = k/n'$. Downstream, the n' bits are provided to a demultiplexer (110) which is combined to a symbol mapper in order to label symbols that are to be transmitted through a channel.

If the modulation used is a binary phase shift keying (BPSK) modulation or a quadrature phase shift keying (QPSK) modulation, the bits are transmitted on the channel. If higher order modulations $\mathcal{X}$ are used, the bits are treated as follows.

First, let us consider $\mathcal{X}$ as a M-ASK constellation. The symbols of a M-ASK constellations, where $M = 2^m$, are

$$\mathcal{X} = \{-2^m + 1, .., -3, -1, +1, +3, ...., +2^m - 1\}.$$

Hence m bits are required to label the symbols. As an example, the natural labelling (200) of the symbols in the M = 16-ASK constellation is provided by Figure 2. Here, $m = log_2(M) = 4$ bits are required for the labelling.

After the RM, a de-multiplexer (called interleaver in the standard) outputs m streams, one for each labelling bit (i.e., bit level, see Figure 2) of the symbols of the modulation. The symbols at the output of the symbol mapper are then transmitted on the channel.

We define a labelling bit stream as the subset of the coded bits, before the demultiplexer, used to label one bit level of the symbols. E.g., $B_1$ on Figure 1 is a labelling bit stream and $B_1 = b_1^1 ... b_1^{k'}$, where k' is the number of symbols transmitted on the channel. In the present document, a bit stream $B_i$ is said to be 'original' when it contains k' shaping bits $b_i$ representing a unique data flow among the k input bits. As such, $B_1$ on Figure 1 is an example of an original labelling bit stream. By contrast, a bit stream that has a size smaller than k' is not considered 'original'. Examples of bit streams that are not original are provided later in the present document.

It is now referred to the Hybrid Automatic Repeat reQuest (HARQ) scheme implemented in 5G. this scheme belongs to the category of Incremental Redundancy scheme. At each round, a subset of the mother codeword is selected (by the RM) and then transmitted.

Figure 3 shows how the HARQ is implemented in 5G. First, the bits of the mother codeword are put in a circular buffer (300). Then, at each of the possible four rounds (RV0, RV1, RV2, and RV3), a different subset of the coded bits is transmitted. For instance, at round RV2 (302), only parity bits are transmitted.

It is now referred to the probabilistic amplitude shaping (PAS) scheme, as disclosed in [BSS2015], which is a popular technique to combine shaping and coding. The principle of PAS, illustrated on Figure 4, is the following: a distribution matcher (DM) (400) outputs symbols according to the positive side of a target shaping distribution, where each symbol is labelled with several bits. The function b() (402) outputs the labelling bits of a given symbol $x_i$. The bits corresponding to the labelling of the symbols are used as inputs of a systematic error-correcting code. We call these bits the shaping bits. The block "P" (404) computes and outputs parity bits, one per symbol, which determine the sign of the symbols to be transmitted. The function s() (406) outputs the sign corresponding to a bit $b_s^i$. We call these bits the sign bits.

The key ideas underlying PAS are the following:

- Since systematic encoding is used, the distribution of the shaping bits is not changed by the error-correcting code. They can therefore be non-equiprobable.
- It is widely accepted that the parity bits of an error-correcting code have an equiprobable distribution. This is suited to symmetric shaping distributions as the symbols have the same probability to be positive and negative and the sign bits should therefore remain equiprobable.

Consequently, PAS successfully combines shaping and coding.

With this scheme, the baseline rate of the code is $R = (m - 1)/m$. The rate can be easily increased by using some sign bits as systematic bits. However, it cannot be decreased with this standard scheme.

As explained below, issues are encountered when trying to combine a shaping scheme such as PAS with the 5G NR LDPC coding scheme.

Regarding the puncturing of the shaping bits, ideally, one would "plug" the shaping scheme (500) to the 5G NR LDPC coding scheme (510) as shown for example on the system depicted in Figure 5. In this example, m = 4 bits are used per symbols, including three shaping bits. For the sake of simplicity, in this example, both the puncturing of the systematic and non-systematic bits are tasked to the RM.

However, the above combination of a shaping scheme and of a coding scheme does not enable to achieve the desired shaping distribution. Indeed, if the shaping bits, used as systematic bits, are punctured without care, then the resulting distribution of the symbols is significantly altered.

Regarding the puncturing of the HARQ schemes, as shown in Figure 3, some rounds of the HARQ schemes include no systematic bits (e.g., RV2 on Figure 3), and thus only parity bits. Since the parity bits have an equiprobable i.i.d. distribution, it is not possible to implement shaping only with these bits.

First, let us clearly differentiate a shaping bit from a non-shaping bit: A bit corresponding to a given bit level (see Figure 2) is a non-shaping bit if the bit has an equiprobable distribution (to take the value 0 and 1) and if the distribution is independent of the other bit levels. A bit corresponding to a given bit level is a shaping bit if it is not a non-shaping bit.

We differentiate two cases for the puncturing of the systematic bits: the case where the punctured systematic bits are shaping bits and the case where they are non-shaping bits.

It is now proposed a technique focused on the puncturing of the systematic non-shaping bits.

For this purpose, the quantized target shaping distribution is first recalled. Figure 7 illustrates an example of a quantized target shaping distribution (1200), for a 16-ASK, which meets the requirements set out in European patent application EP22305529.4. Simulation results, as depicted in Fig. 4 of [CG2022], show that this distribution enables to get quasi-optimal performance. Consequently, this distribution can be taken as the target shaping distribution.

Figure 8 represents the two sub-constellations of the 16-ASK. Their natural labelling according to the main constellation with the less significant bit on the left is also shown. The bits on the figure corresponds to the bit levels 2/3/4. The first sub-constellation (1300) corresponds to bit level 1 = 0 and the second sub-constellation (1302) to bit level 1 = 1.

Hence, the constellation $\mathcal{X}$ can be expressed as the union of two shifted versions of a reference sub-constellation, say $\mathcal{X}_r$ : such as

$$\mathcal{X} = \mathcal{X}_r \cup (\mathcal{X}_r + 2) = \cup_{a_i \in \alpha} \mathcal{X}_r + a_i,$$

where $\alpha = \{0,2\}$. Moreover, a transmitted symbol belongs equiprobably to one of the two sub-constellations.

Again, let us consider the 16-ASK constellation for the example. The natural labelling of the symbols in this constellation is provided in Table 1. We see that the first bit level discriminates between the two sub-constellations shown on Figure 7.

Consequently, with this distribution, two bits have an equiprobable and independent distribution: the shaping bit and the bit which discriminates between the two constellations. We name this second bit the quantification bit.

In the example, there is only one quantification bit. Instead of having only two adjacent symbols with the same probability, one could have a stronger quantification with 4, 8 etc. adjacent symbols with the same probability. We let q be the number of quantification bits and sign bits. In the above example, q=2.

It is further proposed a technique in which the quantification bits and/or sign bits are used as punctured systematic bits (independently of the other punctured systematic bits).

The additional bit level(s) with an equiprobable distribution enables to use both the quantification bits and/or sign bits as parity bits. This enables to decrease the rate of the code to $R = (m - q)/m$.

Further, since these bits have an independent and equiprobable distribution, they can be placed at the systematic puncturing locations and replaced by parity bits in the symbol mapping. Note that there is no constraint on the puncturing of the other bits to puncture these bits.

Figure 9 shows a first example of adaptation of the 5G NR LDPC scheme where the quantification bits $b_1$ are used as (non-shaping) systematic bits and where a subset of c of these bits are put at puncturing location(s) by a first interleaver $\pi'$ (1000). In this example, the code rate is $R = ((m - 1)k')/(mk' + c)$ and the parity encoding (100) generates $k' + c$ bits $b_4$. Before the demultiplexer and after the RM, a second interleaver $\pi$ (1400) is added. This second interleaver puts the extra c bits $b_4$ at the location of the missing punctured bits $b_1$. In Figure 9, $B_2$ is an original bit stream, which comprises k' shaping bits $b_2$ among the $k = 3k'$ bits of the input bit sequence. $B_3$ is also an original bit stream, which comprises k' shaping bits $b_3$ among the k = 3k' bits of the input bit sequence. On the contrary, $B_1$ comprises only k' - c shaping bits $b_1$ as a result of the puncturing. $B_1$ does not contain k' shaping bits $b_2$ among the k = 3k' bits of the input bit sequence and is therefore not an original bit stream. $B_4$ comprises only parity bits that are not part of the input bit sequence. $B_4$ is therefore not an original bit stream.

Figure 10 shows a second example of adaptation of the 5G NR LDPC scheme where only c non-shaping systematic bits are used, where c is the number of punctured systematic bits. Consequently, the rate of the code is decreased to $R = ((m - 2)k' + c)/(mk' + c)$. In Figure 10, $B_2$ and $B_3$ are original bit streams which remain unaltered throughout the depicted workflow. On the contrary, $B_1$ is empty and is therefore not an original bit stream.

Further, $B'_1$ and $B_4$ comprise only parity bits and are not original bit streams.

Note that c' non-shaping systematic bits, with $c' = c + d$ and $d \geq 0$, could also be used (instead of, specifically, k' or c as done in the examples).

It is now proposed a technique focused on the puncturing of the systematic bits including the shaping systematic bits.

As a note on cyclic redundancy check (CRC): the CRC, used by the receiver to check if the message was correctly decoded or not, is computed from the information bits before LDPC coding. The generated CRC bits are added to the information bit sequence. The resulting sequence is used as systematic bits for the channel code. One can assume that the CRC bits are equiprobable. Hence, they can either be used as non-shaping systematic bits or as input of the DM along with the other information bits.

The requirement in terms of puncturing systematic shaping bits, to maintain the shaping, is that each symbol should be labelled with the shaping bits. For instance, on Figure 5 all symbols should be labelled with a set $b_1b_2b_3$ (and one non-shaping bit $b_4$). Consequently, if one systematic bit $b_1$ is punctured, the corresponding bits $b_2b_3$ as well as one parity bit $b_4$). Should also be punctured.

Let us consider the coding scheme of Figure 5 with a code of rate $R = (m - 1)/m$ (= 3/4 in the provided example). At the output of the error-correcting code, the bits are ordered as a concatenation $B_1B_2B_3B_4$ of three labelling bit streams $B_1B_2B_3$, each formed of systematic bits output by the shaping scheme, and of a bit stream $B_4$ formed of parity bits output by the parity encoder.

Assume that we want to achieve a rate $R = 6/7$ by transmitting only a subset of the coded bits (and puncturing some parity bits), namely 7k'/2 bits instead of 4k' = 8k'/2 bits. Then, a total of k'/2 bits should be punctured as shown by the puncturing scheme (600) proposed in Figure 6: $k'/(2 * m)$ bits (602) of each original labelling bit stream should be punctured.

This can be achieved by the system depicted on Figure 11, which corresponds to a modification of the system of Figure 5, with $\pi$ as an added interleaver (700) placed after the parity encoder and before the rate matcher, such that the proper bits are punctured. The ordering (702) of the bits after this new interleaver (700) is depicted on Figure 12. Then, a RM puncturing the last coded bits (as the one in the 5G NR LDPC coding scheme) discards the bits to be punctured (800), represented here as the right-most part.

Note that the same result is achieved, without adding the interleaver, by simply switching the RM (108) and the demultiplexer (110), as depicted on Figure 13. In this case, the RM simply discards the k'/(2 * m) last symbols.

Alternatively, the labelling bit streams and the puncturing locations could have a different form, as long as k'/(2 * m) bits of each original labelling bit stream are punctured. This alternative option may result from a (first) interleaver $\pi'$ (1000) placed after the multiplexer and before the parity encoder, as shown on Figure 14. In this case, the (second) interleaver $\pi$ (700) sorts the bits such that the ordering of Figure 12 is obtained at the output. Figure 15 shows an example of a different ordering (1002) after $\pi'$. This ordering represents the systematic bits provided to the parity encoder and the parity bits that are output by the parity encoder, as well as alternative puncturing locations (1100) corresponding to bits which are to be punctured. Note also that any parity bits can be punctured (not necessarily the last ones).

To summarize, the proposed technique enables to implement the rates $R = ((m - 1)k')/(mk' - x)$ where $x$ is the number of bits punctured, under the constraint that x/m bits of each original labelling bit stream are punctured. The rate of the code used is $((m - 1)k')/mk'$. Note that this latter rate can be obtained by generating more parity bits with the parity encoding and directly puncturing some of them (i.e., within the block P on the figures).

As a note, original labelling bit streams, defined above for the puncturing of the systemic shaping bits, shall be established after the puncturing of the systematic non-shaping bits (i.e., when we say "the bit stream is original if it is the one obtained without any puncturing", the puncturing of systematic shaping bits is not taken into account).

To summarize, regarding puncturing both systematic shaping and non-shaping bits, the combination of the proposed techniques enable to implement the rates $((m - q)k' + c')/((m - q)k' + qk' - d) = ((m - q)k' + c')/(mk' - d)$, where

> the rate of the code is $((m - q)k' + c')/(mk' + c - d)$
> c is the number of systematic non-shaping bits punctured,
> $c' = c + d$ with $d \geq 0$, and
> $x$ is the number of bits punctured, under the constraint that x/m bits of each original labelling bit stream are punctured.

An example of a system combining both proposed techniques is shown on Figure 16. An example of a possible coded sequence (1604) at the output of the parity encoding, before the puncturing and interleaving, is shown on Figure 17. After puncturing, an output coded sequence (1602) is demultiplexed and used, according to a mapping scheme, to label k' symbols that are to be transmitted.

An application of the system of Figure 16 to HARQ is now proposed.

Let us consider the scheme of Figure 16 with c = 0 and m = 4 bits per symbol. After the puncturing of the systematic bits, we have 2k' systematic bits and 2k' parity bits. Assume that we want to design two rounds of HARQ. The target rate for the first round is $R_0 = 2/3$. The remaining bits are transmitted at the second round such that the rate $R_1 = 2/4$ is achieved. At the output (1604) of the error-correcting code, the bits are in the order depicted in Figure 18.

If only 3k' out of the 4k' bits should be transmitted at the first round, to achieve the rate $R_0 = 2/3$, then $x = k'$ bits should be punctured. The bit streams are punctured as follows: k'/4 bits of each bit stream $B_1B_2B_3B_4$ are punctured. In this case the full system is as depicted on Figure 19, where $\pi'$ (1900) is the added interleaver. At the second round, the RM selects the right-most part of the input stream (see Figure 12) and punctures the left-most part.

Citation List

[BSS2015] G. Böcherer, F. Steiner, and P. Schulte, "Bandwidth Efficient and Rate-Matched Low-Density Parity-Check Coded Modulation," IEEE Transactions on Communications, vol. 63, no. 12, Dec. 2015.

[DPS2020] Erik Dahlman, Stefan Parkvall, and Johan Sköld, "5G NR, The next generation wireless access technology," 2018.

[CG2022] Vincent Corlay and Nicolas Gresset, "A Simple Sign-Bit Probabilistic Shaping Scheme" IEEE Communications Letters, vol. 26, no. 4, Apr. 2022.

**Claims**

1. A method, in a data transmitter, for transmitting k" symbols, with k" being a positive integer, the method comprising:

   - obtaining an input bit sequence representing a first data flow and a second data flow,

      the first data flow comprising $k' \times (m - q)$ shaping bits representing, at least, m - q input labelling bit streams, with k' being a positive integer greater than or equal to $k''$, m being a number of bit streams to be outputted by a de-multiplexer and q being a positive integer,
      the second data flow comprising c' non-shaping bits, with c' being a positive integer smaller than or equal to $(q - 1)k'$, the c' non-shaping bits comprising at most q - 1 quantification and/or sign bits,

   - puncturing at least part of the non-shaping bits of the second data flow, thusly obtaining at most $q$ - 1 incomplete bit streams, and
   - obtaining the k" symbols based at least on the at most q - 1 incomplete bit streams, and on the m - q input labelling bit streams of the first data flow.

2. A method according to claim 1, further comprising ordering the input bit sequence by placing c of the c' non-shaping bits at systematic puncturing locations, with c being a positive integer smaller than or equal to $c'$, and wherein puncturing at least part of the non-shaping bits of the second data flow comprises puncturing at least the c non-shaping bits at the systematic puncturing locations.

3. A method according to claim 1, further comprising designating locations of at least c of the c' non-shaping bits in the input bit sequence as systematic puncturing locations and wherein puncturing at least part of the non-shaping bits of the second data flow comprises puncturing at least the c non-shaping bits at the systematic puncturing locations.

4. A method according to claim 2 or 3, further comprising:

   - obtaining an output of an encoder using a systematic error-correcting coding scheme and having received as input bits associated to the input bit sequence, the output of the encoder comprising $qk'$ - $d$ parity bits, with $d = c'$ - $c$ and $d$ being a positive integer or zero,
   - completing the at most q - 1 incomplete bit streams with $(qk'$ - $d)$ - $k'$ of the $qk'$ - $d$ parity bits, thusly obtaining at most q - 1 completed bit streams, and

      wherein obtaining the k" symbols is based on
      the m - q input labelling bit streams of the first data flow,
      the at most q - 1 completed bit streams, and
      the parity bits output by the encoder and not used to complete the at most q - 1 incomplete bit streams.

5. A method according to claim 4, wherein obtaining the k" symbols based on the m original labelling bit streams comprises:

   - ordering an output bit sequence comprising the m original labelling bit streams by placing $x$ bits in additional puncturing locations, with $x$ being a positive integer, the $x$ bits comprising x/m bits of each of the m original labelling bit streams,
   - puncturing the $x$ bits placed in the additional puncturing locations to obtain m punctured labelling bit streams, and
   - obtaining the k" symbols by using one bit of each punctured labelling bit stream to label a corresponding input symbol.

6. A method according to any one of claims 2 to 5, wherein c' = $k'$.

7. A method according to any one of claims 2 to 5, wherein c = c'.

8. A method according to claim 7, wherein the additional puncturing locations correspond to the end of the output bit sequence after ordering the output bit sequence.

**9.** A method according to any one of claims 1 to 4, wherein obtaining the k" symbols comprises:

   - using one bit of each original labelling bit stream to label a corresponding input symbol, thusly obtaining the k" symbols and additional symbols, and
   - discarding the additional symbols using a rate matcher.

**10.** A method according to any one of claims 1 to 9, the method further comprising, after transmitting the k" symbols, separately transmitting symbols having, as labelling bits, the c punctured non-shaping bits and the $x$ punctured bits.

**11.** A data transmitter configured for transmitting k" symbols, with k" being a positive integer, by at least:

   - obtaining an input bit sequence representing a first data flow and a second data flow,

      the first data flow comprising $k' \times (m - q)$ shaping bits,
      the first data flow representing, at least, m input labelling bit streams,
      the second data flow comprising c' non-shaping bits associated to the shaping bits,
      with m being a number of bit streams to be outputted by a de-multiplexer,
      with q being a number of non-shaping bits of the second data flow which are associated to at least part of the shaping bits of the first data flow,
      the non-shaping bits including q' quantification bits and a sign bit,
      with c' being a positive integer smaller than or equal to $k'$,

   - puncturing at least part of the non-shaping bits of the second data flow, thusly obtaining at most $q - 1$ incomplete bit streams, and
   - obtaining the k" symbols based at least on the at most q - 1 incomplete bit streams, and on the m - q input labelling bit streams of the first data flow.

**12.** A computer program comprising instructions which, when the program is executed by a computer, cause the computer to carry out the method of any one of claims 1 to 10.

FIG. 1

200

| Symbols | -15 | -13 | -11 | -9 | -7 | -5 | -3 | -1 | 1 | 3 | 5 | 7 | 9 | 11 | 13 | 15 |
|---|---|---|---|---|---|---|---|---|---|---|---|---|---|---|---|---|
| Bit-level 1 | 0 | 1 | 0 | 1 | 0 | 1 | 0 | 1 | 0 | 1 | 0 | 1 | 0 | 1 | 0 | 1 |
| Bit-level 2 | 0 | 0 | 1 | 1 | 0 | 0 | 1 | 1 | 0 | 0 | 1 | 1 | 0 | 0 | 1 | 1 |
| Bit-level 3 | 0 | 0 | 0 | 0 | 1 | 1 | 1 | 1 | 0 | 0 | 0 | 0 | 1 | 1 | 1 | 1 |
| Bit-level 4 | 0 | 0 | 0 | 0 | 0 | 0 | 0 | 0 | 1 | 1 | 1 | 1 | 1 | 1 | 1 | 1 |

FIG. 2

**FIG. 3**

**FIG. 4**

FIG. 5

**FIG. 6**

EP 4 383 600 A1

**FIG. 7**

**FIG. 8**

EP 4 383 600 A1

**FIG. 9**

**FIG. 10**

**FIG. 11**

FIG. 12

**FIG. 13**

**FIG. 14**

1002

1100    1100    1100    1100    1100

$B_2$    $B_1$    $B_2$    $B_3$    $B_1$    $B_4$

Systematic bits    Parity bits

# FIG. 15

FIG. 16

**FIG. 17**

EP 4 383 600 A1

1604

B₁ B₂ B₃ B₄

Systematic bits     Parity bits

**FIG. 18**

FIG. 19

Europäisches
Patentamt

European
Patent Office

Office européen
des brevets

# EUROPEAN SEARCH REPORT

Application Number

EP 22 30 6797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/091886 A1 (YOFFE YARON [IL] ET AL) 25 March 2021 (2021-03-25) <br> * figure 3 * <br> * paragraph [0060] - paragraph [0076] * <br> * paragraph [0048] * <br> ----- | 1-12 | INV. H04L1/00 |
| A,D | BOCHERER GEORG ET AL: "Bandwidth Efficient and Rate-Matched Low-Density Parity-Check Coded Modulation", IEEE TRANSACTIONS ON COMMUNICATIONS, IEEE SERVICE CENTER, PISCATAWAY, NJ. USA, vol. 63, no. 12, 1 December 2015 (2015-12-01), pages 4651-4665, XP011593618, ISSN: 0090-6778, DOI: 10.1109/TCOMM.2015.2494016 [retrieved on 2015-12-15] * the whole document * <br> ----- | 1-12 | |

TECHNICAL FIELDS SEARCHED (IPC)

H04L

The present search report has been drawn up for all claims

| Place of search | Date of completion of the search | Examiner |
|---|---|---|
| Munich | 4 May 2023 | Stolte, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6797

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2023

| Patent document cited in search report | Publication date | Patent family member(s) | Publication date |
|---|---|---|---|
| US 2021091886 A1 | 25-03-2021 | NONE | |

# EP 4 383 600 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **G. BÖCHERER ; F. STEINER ; P. SCHULTE.** Bandwidth Efficient and Rate-Matched Low-Density Parity-Check Coded Modulation. *IEEE Transactions on Communications,* December 2015, vol. 63 (12

- **ERIK DAHLMAN ; STEFAN PARKVALL ; JOHAN SKÖLD.** *5G NR, The next generation wireless access technology,* 2018
- **VINCENT CORLAY ; NICOLAS GRESSET.** A Simple Sign-Bit Probabilistic Shaping Scheme. *IEEE Communications Letters,* April 2022, vol. 26 (4